# EUROPEAN PATENT APPLICATION

(11) **EP 4 794 003 A1**
(43) Date of publication of application: **19.08.2026**
(21) Application number: 24880979.0
(22) Date of filing: 07.05.2024
(51) Int. Cl.: H01M 4/13, H01M 10/0525

(54) **NEGATIVE ELECTRODE SHEET, BATTERY CELL AND ELECTRIC DEVICE**

(30) Priority: 27.10.2023 CN 202311406250
(71) Applicant: Contemporary Amperex Technology Co., Limited, Ningde, Fujian 352100 (CN)
(72) Inventor: YANG, Zhoufei, Ningde, Fujian 352100 (CN); PEI, Zhenxing, Ningde, Fujian 352100 (CN); NIU, Congsu, Ningde, Fujian 352100 (CN); LI, Xiaowei, Ningde, Fujian 352100 (CN)
(74) Representative: Ziebig Hengelhaupt Intellectual Property Attorneys Patentanwaltskanzlei PartGmbB
(86) International application number: PCT/CN2024/091353
(87) International publication number: WO 2025/086600

(57) **Abstract**

A negative electrode sheet, a battery cell and an electric device. The negative electrode sheet comprises a negative electrode current collector and a negative electrode film layer arranged on at least one side of the negative electrode current collector; the negative electrode film layer comprises at least one negative electrode active material layer containing a negative electrode active material, one of the at least one negative electrode active material layer comprises a first area and a second area, and in the thickness direction of the negative electrode sheet, the first area at least covers the two ends of the negative electrode current collector in a first direction; the thickness direction is perpendicular to the first direction; the second area and the first area are continuously arranged in the first direction, the second area is sandwiched in the first area, and the second area covers part of the negative electrode current collector in the thickness direction; the compaction density of the negative electrode active material located in the first area is Ag/cm³, the compaction density of the negative electrode active material located in the second area is Bg/cm³, and B/A<1.

## Description

### CROSS-REFERENCE TO RELATED APPLICATION

The present application claims priority to Chinese Patent Application No. 202311406250.0, filed on October 27, 2023 and entitled "NEGATIVE ELECTRODE SHEET, BATTERY CELL AND ELECTRIC DEVICE", the content of which is incorporated herein by reference in its entirety.

### TECHNICAL FIELD

The present application relates to the technical field of batteries, and in particular, to a negative electrode plate, a battery cell, and an electric device.

### BACKGROUND

Battery cells have the characteristics of high capacity and long lifespan and are therefore widely used in electronic devices such as mobile phones, laptop computers, electric bicycles, electric vehicles, electric airplanes, electric ships, electric toy cars, electric toy ships, electric toy airplanes, and electric tools. As battery cells have achieved great development, higher requirements have been placed on their performance. To improve the performance of the battery cell, the negative electrode plate in the battery cell is generally optimized and improved.

However, at present, when the negative electrode plate is applied to the battery cell, the cycle performance of the battery cell is still poor.

### SUMMARY

The present application provides a negative electrode plate, a battery cell, and an electric device. The cycle performance of the battery cell described in the present application can be improved.

In a first aspect, embodiments of the present application provide a negative electrode plate. The negative electrode plate includes a negative electrode current collector and a negative electrode film layer arranged on at least one side of the negative electrode current collector. The negative electrode film layer includes at least one negative electrode active material layer including a negative electrode active material, one of the at least one negative electrode active material layer includes a first region and a second region, the first region, in a thickness direction of the negative electrode plate, covers at least both ends of the negative electrode current collector in a first direction, and the thickness direction is perpendicular to the first direction; the second region and the first region are continuously arranged in the first direction, the second region is sandwiched in the first region, and the second region covers a part of the negative electrode current collector in the thickness direction, where a compaction density of the negative electrode active material located in the first region is A g/cm³, and a compaction density of the negative electrode active material located in the second region is B g/cm³, where B/A < 1.

Therefore, in the embodiments of the present application, the compaction density of the negative electrode active material in the negative electrode film layer is set differently, so that when the compaction densities of the negative electrode active materials in the first region and the second region meet the above range, the compaction density of the negative electrode active material located at the edge is relatively high, and the compaction density of the negative electrode active material located at the center position is relatively low, which can alleviate the internal stress problem of the negative electrode film layer located at the center position, and improve the reactivity of the negative electrode film layer located at the center position, thereby improving the uniformity of the reactivity of the overall structure of the negative electrode film layer, improving the kinetic performance of the overall structure of the negative electrode film layer, and improving the cycle performance of the battery cell when the negative electrode plate is applied to the battery cell. Moreover, due to the low compaction density of the first region, the proportion of the electrolytic solution is high here, and therefore, the concentration polarization of the liquid phase is relatively mild; under fast-charging conditions, the concentration polarization problem can be alleviated, thereby further improving the cycle performance of the battery cell.

In some embodiments, 1.0 ≤ A ≤ 2.0. The compaction density of the first region is relatively high, which can improve the energy density of the battery cell.

In some embodiments, 1.0 ≤ B ≤ 2.0. The compaction densities of the second region and the first region cooperate with each other, so that the uniformity of the reactivity of the overall structure of the negative electrode film layer can be further improved.

In some embodiments, 0.8 ≤ B/A < 1, which can further improve the uniformity of the reactivity of the overall structure of the negative electrode film layer.

In some embodiments, a dimension of the negative electrode plate in the first direction is smaller than a dimension of the negative electrode plate in a second direction, and any two of the first direction, the second direction, and the thickness direction are perpendicular to each other. Through the above arrangement, it is more conducive to improving the uniformity of the reactivity of the negative electrode plate in the length direction.

In some embodiments, the negative electrode film layer includes two negative electrode active material layers, and the two negative electrode active material layers include a first negative electrode active material layer and a second negative electrode active material layer. The first negative electrode active material layer includes the first region and the second region; the second negative electrode active material layer is located on one side of the first negative electrode active material layer facing the negative electrode current collector. The negative electrode film layer is double-coated, and double-coating is conducive to thick coating, which improves the energy density of the battery cell.

In some embodiments, a lithium intercalation potential of the second negative electrode active material layer is greater than a lithium intercalation potential of the first negative electrode active material layer. Therefore, during the charging process of the battery cell, the concentration polarization problem of the entire negative electrode film layer can be significantly alleviated, and the risk of local lithium plating on the surface of the negative electrode film layer can be reduced, thereby improving the cycle performance and use reliability of the battery cell.

In some embodiments, a porosity of the second negative electrode active material layer is less than a porosity of the first region; and/or a tortuosity of the second negative electrode active material layer is greater than a tortuosity of the first region, which can further improve the uniformity of the reactivity of the negative electrode film layer.

In some embodiments, the second negative electrode active material layer includes a silicon-based material, and a mass percentage of the silicon-based material is greater than or equal to 1% and less than 100% based on a total mass of the second negative electrode active material layer. The introduction of the silicon-based material can significantly improve the specific capacity of the negative electrode plate, which is conducive to improving the energy density of the battery cell. In addition, on the basis of high specific capacity, in combination with the above setting of the lithium intercalation potential, the fast-charging performance of the battery cell can be improved.

In some embodiments, the second negative electrode active material layer includes at least one of a conductive agent and a binder, and a total mass percentage of the conductive agent and the binder is less than or equal to 50% based on the total mass of the second negative electrode active material layer. Since the volume effect of the silicon-based material is more significant (for example, volume expansion is greater) during the charging and discharging process, adjacent silicon-based material particles may be bonded through the arrangement of the binder, thereby alleviating the risk of expansion of the silicon-based material particles and improving the cycle performance. The conductive agent can further improve the conductive performance of the second negative electrode active material layer.

In some embodiments, the first region includes a carbon-based material, and a mass percentage of the carbon-based material is greater than or equal to 90% and less than 100% based on a total mass of the first region; and/or
the first region includes at least one of a conductive agent and a binder, and a total mass percentage of the conductive agent and the binder is less than or equal to 5% based on the total mass of the first region.

In some embodiments, the second region includes a carbon-based material, and a mass percentage of the carbon-based material is greater than or equal to 90% and less than 100% based on a total mass of the second region; and/or
the second region includes at least one of a conductive agent and a binder, and a total mass percentage of the conductive agent and the binder is less than or equal to 5% based on the total mass of the second region.

In some embodiments, the negative electrode plate further includes a negative electrode bottom coating, and the negative electrode bottom coating is located between the negative electrode current collector and the negative electrode film layer. The arrangement of the negative electrode bottom coating can improve the conductive performance of the negative electrode film layer and enhance the mass production capability thereof.

In some embodiments, the negative electrode bottom coating includes a binder, and a mass percentage of the binder is less than or equal to 5% based on a total mass of the negative electrode bottom coating.

In some embodiments, the negative electrode bottom coating includes a conductive agent, and a mass percentage of the conductive agent is greater than or equal to 95% and less than 100% based on the total mass of the negative electrode bottom coating.

In a second aspect, the present application further provides a battery cell. The battery cell includes the negative electrode plate according to any one of the embodiments in the first aspect of the present application.

In a third aspect, the present application further provides an electric device, including the battery cell according to any one of the embodiments in the third aspect of the present application.

### BRIEF DESCRIPTION OF THE DRAWINGS

To more clearly illustrate the technical solutions according to embodiments of the present application, the drawings required for illustrating the embodiments of the present application are briefly described below. Apparently, the drawings in the following description illustrate merely some embodiments of the present application, and those of ordinary skill in the art may still derive other drawings from these drawings without creative efforts.
FIG. 1 is a schematic view of one embodiment of a negative electrode plate of the present application.
FIG. 2 is a schematic cross-sectional view of the negative electrode plate shown in FIG. 1 taken along the line A-A.
FIG. 3 is another schematic cross-sectional view of the negative electrode plate shown in FIG. 1 taken along the line A-A.
FIG. 4 is a schematic view of one embodiment of an electrode assembly in a battery cell of the present application.
FIG. 5 is a schematic view of one embodiment of a battery cell of the present application.
FIG. 6 is a schematic exploded view of the embodiment of the battery cell in FIG. 5.
FIG. 7 is a schematic view of one embodiment of a battery module of the present application.
FIG. 8 is a schematic view of one embodiment of a battery pack of the present application.
FIG. 9 is a schematic exploded view of the embodiment of the battery pack shown in FIG. 8.
FIG. 10 is a schematic view of one embodiment of an electric device including the battery cell of the present application as a power source.

The drawings are not necessarily drawn to scale.

Reference numerals in the drawings are explained as follows:
X. first direction;
1. battery pack; 2. upper case body; 3. lower case body; 4. battery module;
5. battery cell; 51. housing; 52. electrode assembly;
53. cover plate;
6. electric device;
7. negative electrode plate; 70. negative electrode film layer; 71. first negative electrode active material layer; 711. first region; 712. second region; 72. second negative electrode active material layer; 73. negative electrode current collector;
8. positive electrode plate;
9. separator.

### DETAILED DESCRIPTION

Hereinafter, embodiments of the negative electrode plate, the battery cell, and the electric device of the present application are specifically disclosed in detail with appropriate reference to the drawings. However, unnecessarily detailed descriptions may be omitted. For example, detailed descriptions of well-known matters and repetitive descriptions of actually identical structures may be omitted. This is to avoid unnecessary lengthiness of the following descriptions and to facilitate understanding by those skilled in the art. Additionally, the drawings and the following descriptions are provided to enable those skilled in the art to fully understand the present application and are not intended to limit the subject matter recited in the claims.

The "ranges" disclosed in the present application are defined with lower and upper limits. A given range is defined by selecting a lower limit and an upper limit that delineate the boundaries of a particular range. Ranges defined in this manner may include or exclude the end values and can be combined arbitrarily, which means that any lower limit may be combined with any upper limit to form a range. For example, if ranges of 60-120 and 80-110 are listed for a particular parameter, it is understood that ranges of 60-110 and 80-120 are also anticipated. Additionally, if the minimum range values listed are 1 and 2, and the maximum range values listed are 3, 4, and 5, then the following ranges can all be anticipated: 1-3, 1-4, 1-5, 2-3, 2-4, and 2-5. In the present application, unless otherwise specified, the numerical range "a-b" indicates an abbreviated representation of any combination of real numbers between a and b, where both a and b are real numbers. For example, the numerical range "0-5" indicates that all real numbers between "0-5" are listed herein, and "0-5" is merely an abbreviated representation of a combination of these numerical values. Additionally, when stating that a parameter is an integer ≥ 2, it is equivalent to disclosing that the parameter is, for example, an integer of 2, 3, 4, 5, 6, 7, 8, 9, 10, 11, 12, or the like.

Unless otherwise specified, all embodiments and optional embodiments of the present application can be combined with one another to form new technical solutions.

Unless otherwise specified, all technical features and optional technical features of the present application can be combined with one another to form new technical solutions.

Unless otherwise specified, all steps of the present application can be performed sequentially or randomly, preferably sequentially. For example, if the method includes steps (a) and (b), it indicates that the method may include steps (a) and (b) performed sequentially or steps (b) and (a) performed sequentially. For example, if the mentioned method may further include step (c), it indicates that step (c) may be added to the method in any order; for example, the method may include steps (a), (b) and (c), or steps (a), (c) and (b), or steps (c), (a) and (b), or the like.

The battery cell includes a positive electrode plate, a negative electrode plate, and an electrolyte. The positive electrode plate includes a positive electrode film layer including a positive electrode active material. During the charging process, the positive electrode active material serves as a deintercalation donor to provide active ions such as lithium ions in the battery cell. The negative electrode plate includes a negative electrode film layer including a negative electrode active material. The negative electrode active material serves as an intercalation acceptor for active ions. The electrolyte infiltrates into the porous pores of the positive electrode and the negative electrode to provide a migration path for lithium ions between the positive electrode plate and the negative electrode plate.

During the charging and discharging process of the battery cell, active ions are intercalated into or deintercalated from the negative electrode active material, causing volume changes inside the negative electrode active material and between the particles of the negative electrode active material, resulting in internal stress in the negative electrode film layer. For the negative electrode film layer, since the edge of the negative electrode film layer is less geometrically constrained and the center of the negative electrode film layer is subject to an omnidirectional geometric constraint, the internal stress at the edge and the center position of the negative electrode film layer has a difference in magnitude. Generally, the stress at the edge of the negative electrode film layer is smaller, and the stress at the center position is larger, so that the performance deterioration of the negative electrode active material located at the center position of the negative electrode film layer is more significant. As a result, the reactivity of the negative electrode active material located at the center position of the negative electrode film layer is worse, which is not conducive to the intercalation of active ions; the reactivity of the negative electrode film layer is non-uniform, so that the kinetic performance of the negative electrode film layer is deteriorated, and thus the cycle performance of the battery cell is deteriorated.

In view of the above problems, the embodiments of the present application provide a negative electrode plate. According to the negative electrode plate, the negative electrode active material in the negative electrode film layer is designed with differentiated compaction densities. The compaction density of the negative electrode active material located at the edge is relatively high, and the compaction density of the negative electrode active material located at the center position is relatively low, which can alleviate the internal stress problem of the negative electrode active material located at the center position, and improve the reactivity of the negative electrode active material located at the center position, thereby improving the uniformity of the reactivity of the overall structure of the negative electrode film layer, improving the kinetic performance of the overall structure of the negative electrode film layer, and improving the cycle performance of the battery cell when the negative electrode plate is applied to the battery cell. Next, the technical solutions of the present application will be described in detail.

### Negative Electrode Plate

In a first aspect, the present application provides a negative electrode plate.

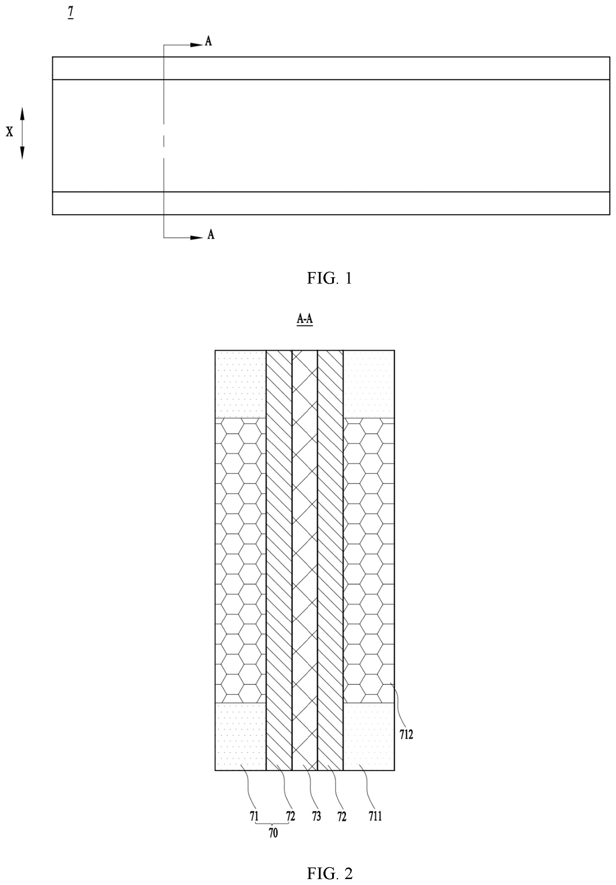

As shown in FIGs. 1 and 2, the negative electrode plate 7 includes a negative electrode current collector 73 and a negative electrode film layer 70 arranged on at least one side of the negative electrode current collector 73. The negative electrode film layer 70 includes at least one negative electrode active material layer, one of the at least one negative electrode active material layer includes a first region 711 and a second region 712, the first region 711, in the thickness direction of the negative electrode plate 7, covers at least both ends of the negative electrode current collector 73 in a first direction X, and the thickness direction is perpendicular to the first direction X; the second region 712 and the first region 711 are continuously arranged in the first direction X, the second region 712 is sandwiched in the first region 711, and the second region 712 covers a part of the negative electrode current collector 73 in the thickness direction, where the compaction density of the negative electrode active material located in the first region 711 is A in g/cm³, and the compaction density of the negative electrode active material located in the second region 712 is B in g/cm³, where B/A < 1.

The negative electrode film layer 70 may include one negative electrode active material layer, or may include two or more negative electrode active material layers, for example, two layers, three layers, or four layers. When the negative electrode film layer 70 includes two or more negative electrode active material layers, the compositions and structures of the negative electrode active material layers may be the same, or certainly may be different. For example, the negative electrode film layer 70 includes two negative electrode active material layers. The two negative electrode active material layers may have the same composition and structure; or have the same composition and different structures; or have different compositions and structures. For another example, the negative electrode film layer 70 includes three negative electrode active material layers. The three negative electrode active material layers may have the same composition and structure; alternatively, two of the three negative electrode active material layers have the same composition and structure, while the other layer has a different composition and structure; alternatively, any two of the three negative electrode active material layers have different compositions and structures.

The negative electrode current collector 73 includes two sides opposite to each other in the thickness direction of the negative electrode plate 7. One of the two sides may be provided with the negative electrode film layer 70, and the other side is not provided with the negative electrode film layer 70; the two sides may also be provided with the negative electrode film layer 70. When the negative electrode film layers 70 are arranged on both sides, it is conducive to improving the energy density of the battery cell.

One of the at least one negative electrode active material layer includes a first region 711 and a second region 712, and the first region 711 covers at least both ends of the negative electrode current collector 73 in the first direction X.

Illustratively, as shown in FIG. 2, the first region 711 may cover only both ends of the negative electrode current collector 73 in the first direction X. In this case, the first region 711 includes two parts, for example, a first part and a second part. The first part covers one end of the negative electrode current collector 73 in the first direction X, the second part covers the other end of the negative electrode current collector 73 in the first direction X, the second region 712 is located between the first part and the second part, and the first part, the second region 712, and the second part are continuously arranged in the first direction X.

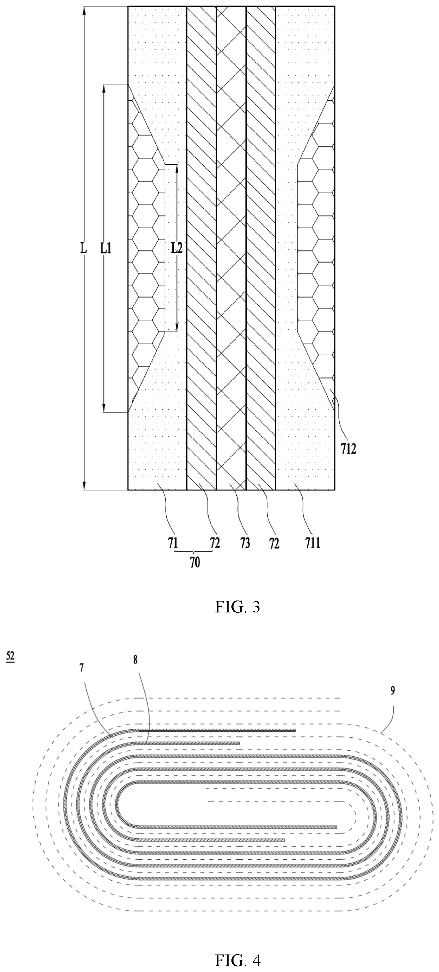

Alternatively, illustratively, as shown in FIG. 3, in addition to covering both ends of the negative electrode current collector 73 in the first direction X, the first region 711 may further cover other parts of the negative electrode current collector 73. In this case, in the thickness direction, the projection of the first region 711 may cover the projection of the negative electrode current collector 73, that is, it is equivalent to that the first region 711 can completely cover the negative electrode current collector 73. The first region 711 may include a recessed part at a position proximal to the middle of the negative electrode current collector 73, and the second region 712 is located in the recessed part. For example, the first region 711 includes a first part, a second part, and a third part. The first part covers one end of the negative electrode current collector 73 in the first direction X, the second part covers the other end of the negative electrode current collector 73 in the first direction X, the third part is located between the first part and the second part and connects the first part and the second part, the first part, the third part, and the third part are continuously arranged in the first direction X, and there may be no obvious connection interface between the three parts. The third part is provided with a recessed part, and the second region 712 is located in the recessed part, which may be understood as the projections of the third part and the second region 712 in the thickness direction at least partially overlapping. For example, the cross section of the second region 712 in the thickness direction may be in the shape of a trapezoid, an arc, or the like. In the case that the cross section of the second region 712 is trapezoidal, the dimension of the side edge of the second region 712 facing away from the negative electrode current collector 73 is greater than the dimension of the side edge of the second region 712 facing the negative electrode current collector 73. Certainly, the foregoing is merely an exemplary illustration and is not intended to limit the scope of the present application.

In the embodiments of the present application, the compaction density of the negative electrode active material in the negative electrode film layer 70 is set differently, so that when the compaction densities of the negative electrode active materials in the first region 711 and the second region 712 meet the above range, the compaction density of the negative electrode active material located at the edge is relatively high, and the compaction density of the negative electrode active material located at the center position is relatively low, which can alleviate the internal stress problem of the negative electrode film layer 70 located at the center position, and improve the reactivity of the negative electrode film layer 70 located at the center position, thereby improving the uniformity of the reactivity of the overall structure of the negative electrode film layer 70, improving the kinetic performance of the overall structure of the negative electrode film layer 70, and improving the cycle performance of the battery cell when the negative electrode plate 7 is applied to the battery cell. Moreover, due to the low compaction density of the first region 711, the proportion of the electrolytic solution is high here, and therefore, the concentration polarization of the liquid phase is relatively mild; under fast-charging conditions, the concentration polarization problem can be alleviated, thereby further improving the cycle performance of the battery cell.

In some embodiments, the negative electrode plate 7 further includes a negative electrode bottom coating, and the negative electrode bottom coating is located between the negative electrode current collector 73 and the negative electrode film layer 70. The arrangement of the negative electrode bottom coating can improve the conductive performance of the negative electrode film layer 70 and enhance the mass production capability thereof. Optionally, the negative electrode bottom coating may include at least one of conductive agents, such as superconducting carbon, conductive graphite, acetylene black, conductive carbon black, Ketjen black, a carbon dot, a single-walled carbon nanotube, a multi-walled carbon nanotube, graphene, and a carbon nanofiber. Optionally, the conductive agent may include conductive carbon black. Optionally, the negative electrode bottom coating may further include a binder. Illustratively, the binder may include at least one of polyvinylidene fluoride (PVDF), styrene-butadiene rubber (SBR), water-soluble unsaturated resin SR-1B, aqueous acrylic resin (e.g., polyacrylic acid PAA, polymethacrylic acid PMAA, or sodium polyacrylate PAAS), polyacrylamide (PAM), polyvinyl alcohol (PVA), sodium alginate (SA), and carboxymethyl chitosan (CMCS).

Optionally, based on the total mass of the negative electrode bottom coating, the mass percentage of the binder may be less than or equal to 5%, for example, 0%, 1%, 2%, 3%, 4%, 5%, or a range consisting of any two of the foregoing pieces of data.

Optionally, based on the total mass of the negative electrode bottom coating, the mass percentage of the conductive agent may be greater than or equal to 95% and less than 100%, for example, 95%, 96%, 97%, 98%, 99%, 100%, or a range consisting of any two of the foregoing pieces of data.

To further improve the uniformity of the reactivity of the overall structure of the negative electrode film layer 70, optionally 0.8 ≤ B/A < 1.

Illustratively, B/A may be 0.5, 0.55, 0.6, 0.65, 0.7, 0.75, 0.80, 0.82, 0.85, 0.86, 0.88, 0.89, 0.90, 0.92, 0.94, 0.95, 0.96, 0.97, or a range consisting of any two of the foregoing numerical values.

In some embodiments, the compaction density A g/cm³ of the negative electrode active material located in the first region 711 is 1.0 g/cm³ to 2.0 g/cm³, optionally 1.55 g/cm³ to 1.8 g/cm³. Illustratively, the compaction density A of the negative electrode active material located in the first region 711 may be 1.0 g/cm³, 1.1 g/cm³, 1.2 g/cm³, 1.3 g/cm³, 1.4 g/cm³, 1.5 g/cm³, 1.52 g/cm³, 1.55 g/cm³, 1.58 g/cm³, 1.6 g/cm³, 1.62 g/cm³, 1.65 g/cm³, 1.68 g/cm³, 1.7 g/cm³, 1.72 g/cm³, 1.73 g/cm³, 1.75 g/cm³, 1.78 g/cm³, 1.8 g/cm³, 1.9 g/cm³, 2.0 g/cm³, or a range consisting of any two of the foregoing numerical values.

In some embodiments, the compaction density B g/cm³ of the negative electrode active material located in the second region 712 is 1.0 g/cm³ to 2.0 g/cm³, optionally 1.55 g/cm³ to 1.8 g/cm³. Illustratively, the compaction density A of the negative electrode active material located in the second region 712 may be 1.0 g/cm³, 1.1 g/cm³, 1.2 g/cm³, 1.3 g/cm³, 1.4 g/cm³, 1.5 g/cm³, 1.52 g/cm³, 1.55 g/cm³, 1.58 g/cm³, 1.6 g/cm³, 1.62 g/cm³, 1.65 g/cm³, 1.68 g/cm³, 1.7 g/cm³, 1.72 g/cm³, 1.73 g/cm³, 1.75 g/cm³, 1.78 g/cm³, 1.8 g/cm³, 1.9 g/cm³, 2.0 g/cm³, or a range consisting of any two of the foregoing numerical values.

For example, the compaction density B g/cm³ of the negative electrode active material located in the second region 712 is 1.55 g/cm³, and the compaction density A g/cm³ of the negative electrode active material located in the first region 711 is 1.75 g/cm³, where B/A is 0.88.

For another example, the compaction density B g/cm³ of the negative electrode active material located in the second region 712 is 1.6 g/cm³, and the compaction density A g/cm³ of the negative electrode active material located in the first region 711 is 1.7 g/cm³, where B/A is 0.94.

For another example, the compaction density B g/cm³ of the negative electrode active material located in the second region 712 is 1.6 g/cm³, and the compaction density A g/cm³ of the negative electrode active material located in the first region 711 is 1.65 g/cm³, where B/A is 0.97.

In the embodiments of the present application, the compaction density of the material has a well-known meaning in the art and can be detected by using devices and methods well known in the art, for example, according to the test standard GB/T24533-2009. A certain amount of the above material is taken and added into a mold with a bottom area of 1.327 cm² of a UTM7305 electronic compression tester; the pressure is applied to 2000 kg (equivalent to 20000 N) and maintained for 30 s, and then the pressure is released and maintained for 10 s; then the powder compaction density of the material under the acting force of 20000 N is recorded and calculated.

In the embodiments of the present application, the first direction X may be parallel to the length direction or the width direction of the negative electrode plate 7. Optionally, the first direction X is parallel to the width direction of the negative electrode plate 7. In this case, the dimension of the negative electrode plate 7 in the first direction X is less than the dimension of the negative electrode plate 7 in the second direction, and any two of the first direction X, the second direction, and the thickness direction are perpendicular to each other, that is, the first direction X is parallel to the width direction, and the second direction is parallel to the length direction. The first region 711 and the second region 712 are continuously arranged in the width direction. The dimension of the first region 711 in the length direction is relatively long, that is, the first region 711 is relatively long; correspondingly, the dimension of the second region 712 is relatively long in the length direction. Through the above arrangement, it is more conducive to improving the uniformity of the reactivity of the negative electrode plate 7 in the length direction.

In some embodiments, the negative electrode active material located in the second region 712 includes a carbon-based material. Optionally, the carbon-based material includes at least one of artificial graphite and natural graphite.

Optionally, based on the total mass of the second region 712, the mass percentage of the negative electrode active material may be greater than or equal to 95% and less than 100%, for example, 90%, 91%, 92%, 93%, 94%, 95%, 96%, 97%, 98%, 99%, 100%, or a range consisting of any two of the foregoing pieces of data.

Optionally, based on the total mass of the second region 712, the mass percentage of the carbon-based material may be greater than or equal to 90% and less than 100%, further optionally 95% to 100%, for example, 90%, 91%, 92%, 93%, 94%, 95%, 96%, 97%, 98%, 99%, 100%, or a range consisting of any two of the foregoing pieces of data.

Optionally, the negative electrode active material located in the second region 712 may further include a silicon-based material. Optionally, the silicon-based material may include at least one of elemental silicon, an oxide of silicon, a silicon-carbon composite, a silicon-nitrogen composite, and a silicon alloy material.

Optionally, based on the total mass of the second region 712, the mass percentage of the silicon-based material may be less than or equal to 5%, optionally less than or equal to 2%, for example, 0%, 1%, 2%, 3%, 4%, 5%, or a range consisting of any two of the foregoing pieces of data.

In some embodiments, the second region 712 may further include a binder. The binder can improve the binding performance of the second region 712, improve the stability of the overall structure of the negative electrode plate 7, and reduce the risk of layer peeling.

Optionally, based on the total mass of the second region 712, the mass percentage of the binder may be less than or equal to 5%, for example, 0%, 1%, 2%, 3%, 4%, 5%, or a range consisting of any two of the foregoing pieces of data.

Illustratively, the binder may include at least one of polyvinylidene fluoride (PVDF), styrene-butadiene rubber (SBR), water-soluble unsaturated resin SR-1B, aqueous acrylic resin (e.g., polyacrylic acid PAA, polymethacrylic acid PMAA, or sodium polyacrylate PAAS), polyacrylamide (PAM), polyvinyl alcohol (PVA), sodium alginate (SA), and carboxymethyl chitosan (CMCS).

In some embodiments, the second region 712 may further include a conductive agent. The conductive agent can further improve the conductive performance of the second region 712.

Optionally, based on the total mass of the second region 712, the mass percentage of the conductive agent may be less than or equal to 5%, for example, 0%, 1%, 2%, 3%, 4%, 5%, or a range consisting of any two of the foregoing pieces of data.

Optionally, based on the total mass of the second region 712, the total mass percentage of the binder and the conductive agent may be less than or equal to 5%, for example, 0%, 1%, 2%, 3%, 4%, 5%, or a range consisting of any two of the foregoing pieces of data.

Illustratively, the conductive agent may include at least one of superconducting carbon, conductive graphite, acetylene black, conductive carbon black, Ketjen black, a carbon dot, a single-walled carbon nanotube, a multi-walled carbon nanotube, graphene, and a carbon nanofiber. Optionally, the conductive agent may include conductive carbon black.

In some embodiments, the negative electrode active material located in the first region 711 may include a carbon-based material and a silicon-based material. Based on the total mass of the first region 711, the mass percentage of the negative electrode active material may be greater than or equal to 95% and less than 100%, for example, 95%, 96%, 97%, 98%, 99%, 100%, or a range consisting of any two of the foregoing pieces of data.

Optionally, based on the total mass of the first region 711, the mass percentage of the silicon-based material may be less than or equal to 5%, optionally less than or equal to 2%, for example, 0%, 1%, 2%, 3%, 4%, 5%, or a range consisting of any two of the foregoing pieces of data. The introduction of the silicon-based material can significantly improve the specific capacity of the negative electrode plate 7, and in the case of the same negative electrode areal capacity, the thickness of the negative electrode plate 7 can be reduced, which is conducive to improving the volumetric energy density of the battery cell, thereby alleviating the concentration polarization problem of the negative electrode plate 7 in the thickness direction. In addition, on the basis of high specific capacity, in combination with the above setting of the lithium intercalation potential, the fast-charging performance of the battery cell can be improved.

Optionally, based on the total mass of the first region 711, the mass percentage of the carbon-based material may be greater than or equal to 60% and less than 100%, further optionally 90% to 100%, and further optionally 95% to 100%, for example, 62%, 63%, 64%, 65%, 66%, 67%, 68%, 69%, 70%, 80%, 85%, 90%, 95%, 96%, 97%, 98%, 99%, 100%, or a range consisting of any two of the foregoing pieces of data.

In some embodiments, the first region 711 may further include a binder. Since the volume effect of the silicon-based material is more significant (for example, volume expansion is greater) during the charging and discharging process, adjacent silicon-based material particles may be bonded through the arrangement of the binder, thereby alleviating the risk of expansion of the silicon-based material particles. Optionally, the mass percentage of the binder located in the first region 711 may be greater than the mass percentage of the binder located in the second region 712.

Optionally, based on the total mass of the first region 711, the mass percentage of the binder may be less than or equal to 5%, for example, 0%, 1%, 2%, 3%, 4%, 5%, or a range consisting of any two of the foregoing pieces of data.

Illustratively, the binder may include at least one of polyvinylidene fluoride (PVDF), styrene-butadiene rubber (SBR), water-soluble unsaturated resin SR-1B, aqueous acrylic resin (e.g., polyacrylic acid PAA, polymethacrylic acid PMAA, or sodium polyacrylate PAAS), polyacrylamide (PAM), polyvinyl alcohol (PVA), sodium alginate (SA), and carboxymethyl chitosan (CMCS), optionally aqueous acrylic resin.

In some embodiments, the first region 711 may further include a conductive agent. The conductive agent can further improve the conductive performance of the first region 711.

Optionally, based on the total mass of the first region 711, the mass percentage of the conductive agent may be less than or equal to 5%, for example, 0%, 1%, 2%, 3%, 4%, 5%, or a range consisting of any two of the foregoing pieces of data.

Illustratively, the conductive agent may include at least one of superconducting carbon, conductive graphite, acetylene black, conductive carbon black, Ketjen black, a carbon dot, a single-walled carbon nanotube, a multi-walled carbon nanotube, graphene, and a carbon nanofiber. Optionally, the conductive agent may include at least one of conductive carbon black, a single-walled carbon nanotube, and a multi-walled carbon nanotube.

Optionally, based on the total mass of the first region 711, the total mass percentage of the binder and the conductive agent may be less than or equal to 5%, for example, 0%, 1%, 2%, 3%, 4%, 5%, or a range consisting of any two of the foregoing pieces of data.

In some embodiments, the negative electrode active material in the first region 711 and the negative electrode active material in the second region 712 include negative electrode active materials of the same material.

In some embodiments, the negative electrode active material in the first region 711 and the negative electrode active material in the second region 712 include negative electrode active materials of the same mass percentage.

In some embodiments, the negative electrode film layer 70 may include two negative electrode active material layers. The two negative electrode active material layers include a first negative electrode active material layer 71 and a second negative electrode active material layer 72; the first negative electrode active material layer 71 includes the first region 711 and the second region 712, and the second negative electrode active material layer 72 is located on one side of the first negative electrode active material layer 71 facing the negative electrode current collector 73. The negative electrode film layer 70 is double-coated, and double-coating is conducive to thick coating, which improves the energy density of the battery cell.

In the embodiments of the present application, the active ion is a lithium ion.

In some embodiments, the lithium intercalation potential of the second negative electrode active material layer 72 may be higher than the lithium intercalation potential of the first negative electrode active material layer 71. The lithium intercalation potential refers to the voltage at which lithium ions are intercalated into the negative electrode active material.

Specifically, the lithium intercalation potential of the second negative electrode active material layer 72 may be higher than the lithium intercalation potential of the first region 711.

Specifically, the lithium intercalation potential of the second negative electrode active material layer 72 may be higher than the lithium intercalation potential of the second region 712.

In the early stage of the charging process of the battery cell, such as a low state of charge SOC, especially in the fast-charging process, the second negative electrode active material layer 72 is prioritized for lithium intercalation over the first negative electrode active material layer 71, which can improve the overall kinetic curve of lithium intercalation of the negative electrode film layer 70, alleviate the problem of lithium intercalation polarization on the surface layer of the negative electrode film layer 70, and increase the speed of lithium intercalation. The low state of charge SOC may refer to 0% SOC to 20% SOC, 0% SOC to 25% SOC, 0% SOC to 30% SOC, or the like.

In the later stage of the charging process, such as a high state of charge SOC, since the second negative electrode active material layer 72 has been prioritized for lithium intercalation, the distance of the lithium intercalation reaction in the thickness direction is shortened to the coating thickness of the first negative electrode active material layer 71 in this process. The compaction density of the second region 712 is relatively small, which is conducive to the migration of lithium ions, so that the concentration polarization in this region is weakened. At the same time, the small compaction density provides a large reversible expansion space, so that the solid phase diffusion rate of the negative electrode active material, such as graphite, is strengthened, which can improve the lithium intercalation capacity in the high state of charge. The high state of charge SOC may refer to 20% SOC to 100% SOC, 25% SOC to 100% SOC, 30% SOC to 100% SOC, or the like.

Therefore, during the charging process of the battery cell, the concentration polarization problem of the entire negative electrode film layer 70 can be significantly alleviated, and the risk of local lithium plating on the surface of the negative electrode film layer 70 can be reduced, thereby improving the cycle performance and use reliability of the battery cell.

Specifically, since the second negative electrode active material layer 72 has a higher lithium intercalation potential, and the first region 711 is located at the edge part of the first negative electrode active material layer, during the charging process of the battery cell, active ions pass through the first region 711 and are intercalated into the second negative electrode active material layer 72. Especially in the early stage of the charging of the battery cell, the phenomenon that lithium intercalation occurs preferentially in the first region 711 and the second negative electrode active material layer 72 is more pronounced, and the intercalation speed of the active ions is relatively fast, which can further improve the kinetic curve of lithium intercalation of the negative electrode active material and alleviate the problem of lithium intercalation polarization on the surface layer of the negative electrode film layer 70.

In the later stage of the charging of the battery cell, since the first region 711 and the second negative electrode active material layer 72 may have undergone full lithium intercalation, lithium intercalation is mainly concentrated in the second region 712. Since the lithium intercalation depth of the second region 712 is relatively small, the concentration polarization can be weakened, the lithium intercalation capacity in the later stage of charging can be further improved, and the lithium intercalation capacity in the later stage of charging (in the high state of charge) can be improved.

Therefore, during the charging process of the battery cell, from the perspective of thermodynamics, the migration rate of the active ions to the second negative electrode active material layer 72 can be further improved, the concentration polarization problem can be further alleviated, and the risk of local lithium plating on the surface of the negative electrode film layer 70 can be reduced, so that the cycle performance and use reliability of the battery cell can be improved.

In some embodiments, the negative electrode active material located in the second negative electrode active material layer 72 may include a carbon-based material and a silicon-based material. Based on the total mass of the second negative electrode active material layer 72, the mass percentage of the negative electrode active material may be greater than or equal to 50% and less than 100%. Illustratively, the mass percentage of the negative electrode active material may be 50%, 55%, 60%, 65%, 70%, 75%, 80%, 85%, 90%, 95%, 100%, or a range consisting of any two of the foregoing numerical values.

Optionally, based on the total mass of the second negative electrode active material layer 72, the mass percentage of the silicon-based material may be greater than or equal to 1% and less than 100%, optionally greater than or equal to 20% and less than 100%, and further optionally 20% to 60%. The introduction of the silicon-based material can significantly improve the specific capacity of the negative electrode plate 7, which is conducive to improving the energy density of the battery cell. In addition, on the basis of high specific capacity, in combination with the above setting of the lithium intercalation potential, the fast-charging performance of the battery cell can be improved. Illustratively, the mass percentage of the silicon-based material may be 20%, 21%, 22%, 23%, 24%, 25%%, 26%, 27%, 28%, 29%, 30%, 31%, 32%, 33%, 34%, 35%, 36%, 37%, 38%, 39%, 40%, 45%, 50%, 55%, 60%, 65%, 70%, or a range consisting of any two of the foregoing numerical values.

Optionally, based on the total mass of the second negative electrode active material layer 72, the mass percentage of the carbon-based material may be greater than or equal to 10% and less than 100%, further optionally 10% to 70%. Illustratively, the mass percentage of the carbon-based material may be 10%, 11%, 12%, 13%, 14%, 15%, 16%, 17%, 18%, 19%, 20%, 25%, 30%, 35%, 40%, 45%, 50%, 55%, 60%, 65%, 70%, or a range consisting of any two of the foregoing numerical values.

In some embodiments, the second negative electrode active material layer 72 may further include a binder. Since the volume effect of the silicon-based material is more significant (for example, volume expansion is greater) during the charging and discharging process, adjacent silicon-based material particles may be bonded through the arrangement of the binder, thereby alleviating the risk of expansion of the silicon-based material particles and improving the cycle performance. Optionally, the mass percentage of the binder located in the second negative electrode active material layer 72 may be greater than the mass percentage of the binder located in the first region 711.

Optionally, based on the total mass of the second negative electrode active material layer 72, the mass percentage of the binder may be less than or equal to 50%, optionally 3% to 50%; illustratively, the mass percentage of the binder may be 1%, 2%, 3%, 4%, 5%, 6%, 7%, 8%, 9%, 10%, 11%, 12%, 13%, 14%, 15%, 16%, 17%, 18%, 19%, 20%, 21%, 22%, 23%, 24%, 25%%, 26%, 27%, 28%, 29%, 30%, 31%, 32%, 33%, 34%, 35%, 36%, 37%, 38%, 39%, 40%, 50%, or a range consisting of any two of the foregoing numerical values.

Illustratively, the binder may include at least one of polyvinylidene fluoride (PVDF), styrene-butadiene rubber (SBR), water-soluble unsaturated resin SR-1B, aqueous acrylic resin (e.g., polyacrylic acid PAA, polymethacrylic acid PMAA, or sodium polyacrylate PAAS), polyacrylamide (PAM), polyvinyl alcohol (PVA), sodium alginate (SA), and carboxymethyl chitosan (CMCS), optionally aqueous acrylic resin.

In some embodiments, the second negative electrode active material layer 72 may further include a conductive agent. The conductive agent can further improve the conductive performance of the second negative electrode active material layer 72.

Optionally, based on the total mass of the second negative electrode active material layer 72, the mass percentage of the conductive agent may be less than or equal to 50%, optionally 3% to 50%; illustratively, the mass percentage of the conductive agent may be 1%, 2%, 3%, 4%, 5%, 6%, 7%, 8%, 9%, 10%, 11%, 12%, 13%, 14%, 15%, 16%, 17%, 18%, 19%, 20%, 21%, 22%, 23%, 24%, 25%%, 26%, 27%, 28%, 29%, 30%, 31%, 32%, 33%, 34%, 35%, 36%, 37%, 38%, 39%, 40%, 50%, or a range consisting of any two of the foregoing numerical values.

Illustratively, the conductive agent may include at least one of superconducting carbon, conductive graphite, acetylene black, conductive carbon black, Ketjen black, a carbon dot, a single-walled carbon nanotube, a multi-walled carbon nanotube, graphene, and a carbon nanofiber. Optionally, the conductive agent may include at least one of conductive carbon black, a single-walled carbon nanotube, and a multi-walled carbon nanotube.

Optionally, based on the total mass of the second negative electrode active material layer 72, the total mass percentage of the binder and the conductive agent may be less than or equal to 50%, optionally 5% to 50%; illustratively, the total mass percentage of the binder and the conductive agent may be 1%, 2%, 3%, 4%, 5%, 6%, 7%, 8%, 9%, 10%, 11%, 12%, 13%, 14%, 15%, 16%, 17%, 18%, 19%, 20%, 21%, 22%, 23%, 24%, 25%%, 26%, 27%, 28%, 29%, 30%, 31%, 32%, 33%, 34%, 35%, 36%, 37%, 38%, 39%, 40%, 50%, or a range consisting of any two of the foregoing numerical values.

In some embodiments, the compaction density of the second negative electrode active material layer 72 may be greater than the compaction density of the first region 711. Active ions pass through the first region 711 and quickly migrate to the second negative electrode active material layer 72, which can reduce the risk of concentration polarization, thereby improving the cycle performance of the battery cell. In addition, the compaction density of the second negative electrode active material layer 72 is relatively high, which is conducive to improving the thick coating performance of the negative electrode plate 7.

Illustratively, the compaction density of the second negative electrode active material layer 72 is 1.0 g/cm³ to 2.0 g/cm³, optionally 1.55 g/cm³ to 1.8 g/cm³. Illustratively, the second negative electrode active material layer 72 may be 1.0 g/cm³, 1.1 g/cm³, 1.2 g/cm³, 1.3 g/cm³, 1.4 g/cm³, 1.5 g/cm³, 1.52 g/cm³, 1.55 g/cm³, 1.58 g/cm³, 1.6 g/cm³, 1.62 g/cm³, 1.65 g/cm³, 1.68 g/cm³, 1.7 g/cm³, 1.72 g/cm³, 1.73 g/cm³, 1.75 g/cm³, 1.78 g/cm³, 1.8 g/cm³, 1.9 g/cm³, 2.0 g/cm³, or a range consisting of any two of the foregoing numerical values.

The porosity and tortuosity of the negative electrode film layer 70 affect the diffusion performance of active ions to some extent. To further improve the uniformity of the reactivity of the negative electrode film layer 70, in the embodiments of the present application, parameters such as the porosity and tortuosity of the negative electrode film layer 70 may be further improved, so as to improve the uniformity of the reactivity of the negative electrode film layer 70.

In the embodiments of the present application, the tortuosity of the sample has a well-known meaning in the art and can be detected by using devices and methods well known in the art. For example, materials are assembled into a symmetrical battery; 60 µL of 50 mM tetrabutylammonium perchlorate + EC/DMC (EC:DMC = 1:1, and the electrical conductivity of the lithium ion is 1.7 mS/cm) is added to each battery cell to test the electrochemical impedance spectrum in the frequency range of 200 kHz to 50 mHz. The tortuosity can be calculated using τ/ε = Rion × S × kint/l, where τ represents the tortuosity, ε represents the porosity, l represents the thickness of the negative electrode plate, S represents the area of the electrode plate, kint represents the electrical conductivity of the lithium ion of the electrolytic solution, and Rion represents the lithium ion impedance. Rion = 3 × (Rh - Rl), where Rh represents the high-frequency intercept of the impedance spectrum, and Rl represents the low-frequency intercept.

In some embodiments, the porosity of the second region 712 may be greater than the porosity of the first region 711. Since the second region 712 has a relatively large porosity, it is more conducive to improving the migration rate of the active ions in the second region 712 and improving the reactivity of the negative electrode active material located at the center position, thereby improving the uniformity of the reactivity of the overall structure of the negative electrode film layer 70 and improving the kinetic performance of the overall structure of the negative electrode film layer 70.

In some embodiments, the porosity of the second negative electrode active material layer 72 may be less than the porosity of the first region 711. Active ions pass through the first region 711 and quickly migrate to the second negative electrode active material layer 72, which can reduce the risk of concentration polarization, thereby improving the cycle performance of the battery cell.

Illustratively, the porosity of the first region 711 is 20% to 40%, for example, 20%, 21%, 22%, 23%, 24%, 25%%, 26%, 27%, 28%, 29%, 30%, 31%, 32%, 33%, 34%, 35%, 36%, 37%, 38%, 39%, 40%, or a range consisting of any two of the foregoing numerical values.

Illustratively, the porosity of the second region 712 is 25% to 45%, for example, 25%%, 26%, 27%, 28%, 29%, 30%, 31%, 32%, 33%, 34%, 35%, 36%, 37%, 38%, 39%, 40%, 41%, 42%, 43%, 44%, 45%, or a range consisting of any two of the foregoing numerical values.

Illustratively, the porosity of the second negative electrode active material layer 72 is 20% to 30%, for example, 20%, 21%, 22%, 23%, 24%, 25%%, 26%, 27%, 28%, 29%, 30%, or a range consisting of any two of the foregoing numerical values.

In the embodiments of the present application, the porosity of the sample has a well-known meaning in the art and can be detected by using devices and methods well known in the art, for example, referring to the porosity test method of GB/T 24586-2009. The test method is as follows: A sample cup containing the sample is placed in a true density tester, and the test system is sealed. Helium gas is introduced, and the pressures of gases in a sample chamber and an expansion chamber are detected. Then the true volume is calculated according to Boyle's law (PV = nRT), thereby obtaining the porosity of the sample to be tested.

In some embodiments, the tortuosity of the second region 712 may be less than the tortuosity of the first region 711. Since the second region 712 has a relatively small tortuosity, it is more conducive to improving the migration rate of the active ions in the second region 712 and improving the reactivity of the negative electrode active material located at the center position, thereby improving the uniformity of the reactivity of the overall structure of the negative electrode film layer 70 and improving the kinetic performance of the overall structure of the negative electrode film layer 70.

In some embodiments, the tortuosity of the second negative electrode active material layer 72 may be greater than the tortuosity of the first region 711. The tortuosity of the second negative electrode active material layer 72 is relatively larger. As a result, active ions pass through the first region 711 and quickly migrate to the second negative electrode active material layer 72, which can reduce the risk of concentration polarization, thereby improving the cycle performance of the battery cell.

Illustratively, the tortuosity of the first region 711 is 3 to 5, for example, 3, 3.2, 3.5, 3.8, 4.0, 4.2, 4.5, 4.8, 5, or a range consisting of any two of the foregoing numerical values.

Illustratively, the tortuosity of the second region 712 is 1.5 to 3, for example, 1.5, 1.8, 2, 2.2, 2.5, 2.8, 3, or a range consisting of any two of the foregoing numerical values.

Illustratively, the tortuosity of the second negative electrode active material layer 72 is 3 to 5, for example, 3, 3.2, 3.5, 3.8, 4.0, 4.2, 4.5, 4.8, 5, or a range consisting of any two of the foregoing numerical values.

In the embodiments of the present application, the tortuosity has a well-known meaning in the art and can be detected and calculated by using devices and methods well known in the art. For example, materials are assembled into a symmetrical battery; 60 uL of 50 mM tetrabutylammonium perchlorate + EC/DMC (EC:DMC = 1:1, and the electrical conductivity of the lithium ion is 1.7 mS/cm) is added to each battery cell to test the electrochemical impedance spectrum in the frequency range of 200 kHz to 50 mHz. The tortuosity can be calculated using τ/ε = Rion × S × kint/l, where τ represents the tortuosity, ε represents the porosity, l represents the thickness of the negative electrode plate, S represents the area of the negative electrode plate, kint represents the electrical conductivity of the lithium ion of the electrolytic solution, and Rion represents the lithium ion impedance. Rion = 3 × (Rh - Rl), where Rh represents the high-frequency intercept of the impedance spectrum, and Rl represents the low-frequency intercept.

To further improve the specific capacity of the negative electrode plate 7 and the cycle performance of the battery cell, it can be achieved by adjusting the coating areal weight of each negative electrode active material layer in the negative electrode film layer 70.

In some embodiments, based on the total coating areal weight of the negative electrode film layer 70, the mass percentage of the coating areal weight of the second negative electrode active material layer 72 is less than or equal to 5%, for example, 1%, 2%, 3%, 4%, 5%, or a range consisting of any two of the foregoing pieces of data. When the mass percentage of the coating areal weight of the second negative electrode active material layer 72 is 0, it means that the second negative electrode active material layer 72 may not be provided in the negative electrode plate 7.

In some embodiments, based on the total coating areal weight of the negative electrode film layer 70, the mass percentage of the coating areal weight of the first region 711 is 20% to 95%, optionally greater than 50% and less than or equal to 95%, for example, 20%, 21%, 22%, 23%, 24%, 25%%, 26%, 27%, 28%, 29%, 30%, 31%, 32%, 33%, 34%, 35%, 36%, 37%, 38%, 39%, 40%, 42%, 44%, 45%, 48%, 50%, 52%, 55%, 58%, 60%, 65%, 70%, 75%, 80%, 85%, 85%, 90%, 95%, or a range consisting of any two of the foregoing numerical values.

In some embodiments, based on the total coating areal weight of the negative electrode film layer 70, the mass percentage of the coating areal weight of the second region 712 is 5% to 80%, optionally greater than or equal to 5% and less than 50%, for example, 5%, 10%, 15%, 20%, 25%, 30%, 35%, 36%, 37%, 38%, 39%, 40%, 42%, 44%, 45%, 48%, 50%, 52%, 55%, 58%, 60%, 62%, 65%, 68%, 70%, 72%, 75%, 78%, 80%, or a range consisting of any two of the foregoing numerical values.

Illustratively, in the case that the cross section of the second region 712 in the thickness direction is trapezoidal, the cross section is parallel to the first direction X, and the dimension L1 of the side edge of the second region 712 facing away from the negative electrode current collector 73 is greater than the dimension L2 of the side edge of the second region 712 facing the negative electrode current collector 73.

Optionally, 50% ≤ L1/L < 100%, optionally, 50% < L1/L < 100%, and further optionally, 60% ≤ L1/L ≤ 70%. For example, L1/L may be 50%, 55%, 60%, 65%, 70%, 75%, 80%, 85%, 90%, 95%, 98%, or a range consisting of any two of the foregoing numerical values. L represents the dimension of the negative electrode plate 7 in the first direction X.

Optionally, 20% ≤ L2/L ≤ 90%, and optionally, 30% ≤ L2/L ≤ 70%. For example, L2/L may be 20%, 25%, 30%, 35%, 40%, 45%, 50%, 55%, 60%, 65%, 70%, 75%, 80%, 85%, 90%, or a range consisting of any two of the foregoing numerical values.

In some embodiments, the negative electrode film layer 70 further optionally includes other auxiliary agents. As an example, other auxiliary agents may include a thickener, such as sodium carboxymethylcellulose (CMC-Na) or a PTC thermistor material. In some embodiments, based on the total weight of the negative electrode film layer 70, the mass percentage of the other auxiliary agents is ≤ 2 wt%.

In some embodiments, a metal foil or a composite current collector may be used as the negative electrode current collector 73. As an example of the metal foil, a copper foil may be used. The composite current collector may include a polymer material base layer and a metal material layer formed on at least one surface of the polymer material base layer. As an example, the metal material may include at least one of copper, a copper alloy, nickel, a nickel alloy, titanium, a titanium alloy, silver, and a silver alloy. As an example, the polymer material base layer may include at least one of polypropylene (PP), polyethylene terephthalate (PET), polybutylene terephthalate (PBT), polystyrene (PS), and polyethylene (PE).

The negative electrode film layer 70 is generally formed by coating a negative electrode current collector 73 with a negative electrode slurry, drying, and cold pressing. The negative electrode slurry is generally formed by dispersing a negative electrode active substance, an optional conductive agent, an optional binder, and other optional auxiliary agents in a solvent and uniformly stirring. The solvent may be N-methylpyrrolidone (NMP) or deionized water, but is not limited thereto.

The negative electrode plate 7 does not exclude additional functional layers other than the negative electrode film layer 70. In some other embodiments, the negative electrode plate 7 in the embodiments of the present application further includes a protective layer covering the surface of the negative electrode film layer 70.

### Battery Cell

In a second aspect, the present application provides a battery cell. The battery cell includes a negative electrode plate. The negative electrode plate includes the negative electrode plate according to any one of the embodiments in the first aspect of the present application. During the charging and discharging process of the battery cell, the migration rate of the active ions in the negative electrode plate is fast, so that the uniformity of the reactivity of the overall structure of the negative electrode film layer is high, and the kinetic performance of the overall structure of the negative electrode film layer is improved, thereby improving the cycle performance of the battery cell.

### [Positive Electrode Plate]

In some embodiments, the battery cell further includes a positive electrode plate.

The positive electrode plate includes a positive electrode current collector and a positive electrode active material layer arranged on at least one surface of the positive electrode current collector, and the positive electrode active material layer includes a positive electrode active material.

As an example, the positive electrode current collector is provided with two surfaces opposite to each other in the thickness direction thereof, and the positive electrode active material layer is arranged on either or both of the two opposite surfaces of the positive electrode current collector.

In some embodiments, a metal foil or a composite current collector may be used as the positive electrode current collector. For example, as the metal foil, an aluminum foil may be used. The composite current collector may include a polymer material base layer and a metal layer formed on at least one surface of the polymer material base layer. The composite current collector may be formed by forming a metal material (aluminum, aluminum alloy, nickel, nickel alloy, titanium, titanium alloy, silver, silver alloy, etc.) on a polymer material substrate (such as polypropylene (PP), polyethylene terephthalate (PET), polybutylene terephthalate (PBT), polystyrene (PS), and polyethylene (PE)).

In some embodiments, a positive electrode active material for use in battery cells known in the art may be used as the positive electrode active material. As an example, the positive electrode active material may include at least one of the following materials: a layered positive electrode active material (such as ternary, lithium/sodium nickelate, lithium/sodium cobaltate, lithium/sodium manganate, lithium/sodium-rich layered, and rock salt phase layered materials), an olivine-type phosphate active material, a positive electrode active material with a spinel structure (such as spinel lithium manganate, spinel lithium nickel manganate, lithium-rich spinel lithium manganate, and lithium nickel manganate).

Illustratively, the layered positive electrode active material has a general formula of LiₓA_{y}NiₐCo_{b}Mn_{c}M_{(1-a-b-c)}Y_{z}, where 0 ≤ x ≤ 2.1, 0 ≤ y ≤ 2.1, and 0.9 ≤ x + y ≤ 2.1; 0 ≤ a ≤ 1, 0 ≤ b ≤ 1, 0 ≤ c ≤ 1, and 0.1 ≤ a + b + c ≤ 1; 1.8 ≤ z ≤ 3.5; A includes one or more of Na, K, and Mg; M includes one or more of B, Mg, Al, Si, P, S, Ca, Sc, Ti, V, Cr, Fe, Cu, Zn, Sr, Y, Zr, Nb, Mo, Cd, Sn, Sb, Te, Ba, Ta, W, Yb, La, and Ce; Y includes one or more of O and F. Specifically, the layered positive electrode active material may include lithium cobaltate LCO, lithium nickelate LNO, lithium manganate LMO, or the like.

Optionally, the layered positive electrode active material is a ternary material, for example, 0 < a ≤ 1, 0 < b ≤ 1, and 0 < c ≤ 1, illustratively, one or more of LiNi_{1/3}Co_{1/3}Mn_{1/3}O₂ (NCM333), LiNi_{0.8}Co_{0.1}Mn_{0.1}O₂ (NCM811), and LiNi_{0.5}Co_{0.2}Mn_{0.3}O₂ (NCM523).

Illustratively, the olivine-type phosphate active material has a general formula of LiₓA_{y}MeₐM_{b}P_{1-c}X_{c}Y_{z}, where 0 ≤ x < 1.3, 0 ≤ y ≤ 1.3, and 0.9 ≤ x + y ≤ 1.3; 0.9 ≤ a ≤ 1.5, 0 ≤ b ≤ 0.5, and 0.9 ≤ a + b ≤ 1.5; 0 ≤ c ≤ 0.5; 3 ≤ z ≤ 5; A includes one or more of Na, K, and Mg; Me includes one or more of Mn, Fe, Co, and Ni; M includes one or more of B, Mg, Al, Si, P, S, Ca, Sc, Ti, V, Cr, Cu, Zn, Sr, Y, Zr, Nb, Mo, Cd, Sn, Sb, Te, Ba, Ta, W, Yb, La, and Ce; X includes one or more of S, Si, Cl, B, C, and N; Y includes one or more of O and F. Specifically, the olivine-type phosphate active material includes one or more of LiFePO₄, LiMnPO₄, LiNiPO₄, and LiCoPO₄.

Illustratively, the positive electrode active material with a spinel structure has a general formula of LiₓA_{y}MnₐM₂₋ₐY_{z}, where 0 ≤ x ≤ 2, 0 ≤ y ≤ 1, and 0.9 ≤ x + y ≤ 2; 0.5 ≤ a ≤ 2; 3 ≤ z ≤ 5; A includes one or more of Na, K, and Mg; M includes one or more of Ni, Co, B, Mg, Al, Si, P, S, Ca, Sc, Ti, V, Cr, Fe, Cu, Zn, Sr, Y, Zr, Nb, Mo, Cd, Sn, Sb, Te, Ba, Ta, W, Yb, La, and Ce; Y includes one or more of O and F. Specifically, the positive electrode active material with a spinel structure includes one or more of LiMn₂O₄, LiNi_{0.5}Mn_{1.5}O₄, LiCr_{0.3}Mn_{1.7}O₄, Li_{1.1}Al_{0.1}Mn_{1.9}O₄, Li₂Mn₂O₄, and Li_{1.5}Mn₂O₄.

The battery cell, during the charging and discharging process, undergoes deintercalation and consumption of active ions such as Li, and the molar content of Li varies when the battery cell is discharged to different states. In the examples of the positive electrode active material listed in the embodiments of the present application, the molar content of Li is in an initial state of the material, that is, a state before the material is added, and when the positive electrode active material is applied to a battery system, the molar content of Li may change after charging and discharging cycles.

In the examples of the positive electrode active material listed in the embodiments of the present application, the molar content of oxygen O is only a theoretical value. The molar content of oxygen O will vary due to oxygen release from the crystal lattice, and actually, the molar content of oxygen O will fluctuate.

In some embodiments, the positive electrode active material layer further optionally includes a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorinated acrylic resin.

In some embodiments, the positive electrode active material layer further optionally includes a conductive agent. As an example, the conductive agent may include at least one of superconducting carbon, acetylene black, carbon black, Ketjen black, a carbon dot, a carbon nanotube, graphene, and a carbon nanofiber.

In some embodiments, the positive electrode plate can be prepared in the following manner: dispersing the components described above for preparing the positive electrode plate, such as the positive electrode active material, the conductive agent, the binder, and any other components, in a solvent (such as N-methylpyrrolidone) to form a positive electrode slurry; and coating the positive electrode current collector with the positive electrode slurry, and performing drying, cold pressing, and other processes, so that the positive electrode plate can be obtained.

### [Electrolytic Solution]

In some embodiments, the battery cell further includes an electrolytic solution.

During the charging and discharging process of the battery cell, active ions are intercalated and deintercalated back and forth between the positive electrode plate and the negative electrode plate, and the electrolytic solution serves to conduct the active ions between the positive electrode plate and the negative electrode plate. The embodiments of the present application do not particularly limit the type of the electrolytic solution, and a choice can be made as needed in practice.

The electrolytic solution includes an electrolyte salt and a solvent. The types of the electrolyte salt and the solvent are not particularly limited, and a choice can be made as needed in practice.

When the battery cell of the present application is a lithium-ion battery, as an example, the electrolyte salt may include, but is not limited to, at least one of lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bis(trifluoromethanesulfonyl)imide (LiTFSI), lithium trifluoromethanesulfonate (LiTFS), lithium difluoro(oxalato)borate (LiDFOB), lithium bis(oxalato)borate (LiBOB), lithium difluorophosphate (LiPO₂F₂), lithium difluorobis(oxalato)phosphate (LiDFOP), and lithium tetrafluoro(oxalato)phosphate (LiTFOP).

When the battery cell of the present application is a sodium-ion battery, as an example, the electrolyte salt may include, but is not limited to, at least one of sodium hexafluorophosphate (NaPF₆), sodium tetrafluoroborate (NaBF₄), sodium perchlorate (NaClO₄), sodium hexafluoroarsenate (NaAsF₆), sodium bis(fluorosulfonyl)imide (NaFSI), sodium bis(trifluoromethanesulfonyl)imide (NaTFSI), sodium trifluoromethanesulfonate (NaTFS), sodium difluoro(oxalato)borate (NaDFOB), sodium bis(oxalate)borate (NaBOB), sodium difluorophosphate (NaPO₂F₂), sodium difluorobis(oxalato)phosphate (NaDFOP), and sodium tetrafluoro(oxalato)phosphate (NaTFOP).

As an example, the solvent may include, but is not limited to, at least one of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), ethyl methyl sulfone (EMS), and diethyl sulfone (ESE).

In some embodiments, the electrolytic solution further optionally includes an additive. For example, the additive may include a negative electrode film-forming additive or a positive electrode film-forming additive, or may include an additive capable of improving certain properties of the battery, such as an additive for improving the overcharge performance of the battery, an additive for improving the high-temperature performance of the battery, or an additive for improving the low-temperature power performance of the battery.

### [Separator]

In some embodiments, the battery cell further includes a separator.

The present application does not particularly limit the type of the separator, and any porous-structure separator known to have good chemical stability and mechanical stability may be selected and used.

In some embodiments, the separator may be made of a material including at least one of glass fiber, non-woven fabric, polyethylene, polypropylene, and polyvinylidene fluoride. The separator may be a single-layer film or a multi-layer composite film, and there is no particular limitation on this. When the separator is a multi-layer composite film, the materials of the layers may be the same or different, and there is no particular limitation on this.

In some embodiments, the positive electrode plate, the separator, and the negative electrode plate may be manufactured into an electrode assembly through a winding process and/or a stacking process.

As shown in FIG. 4, the electrode assembly 52 includes a positive electrode plate 8, a negative electrode plate 7, and a separator 9, and the electrode assembly is formed through a winding process.

In some embodiments, the battery cell may include an outer packaging. The outer packaging can be used for packaging the electrode assembly and the electrolytic solution described above.

In some embodiments, the outer packaging of the battery cell may be a hard housing, such as a hard plastic housing, an aluminum housing, or a steel housing. The outer packaging of the battery cell may also be a soft pack, such as a pouch-type soft pack. The soft pack may be made of plastic, such as at least one of polypropylene (PP), polybutylene terephthalate (PBT), and polybutylene succinate (PBS).

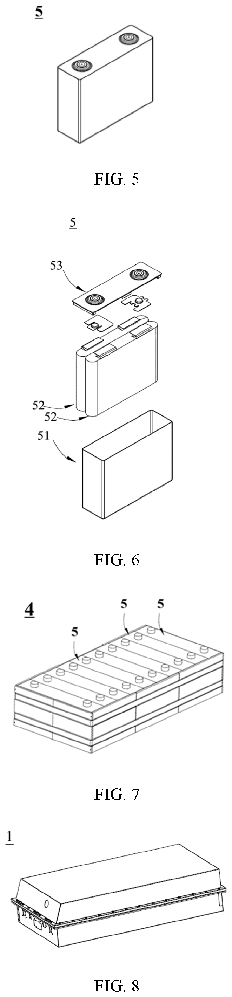

The present application does not particularly limit the shape of the battery cell, and it may have a cylindrical shape, a square shape, or any other shape. For example, FIG. 5 shows a battery cell 5 having a prismatic structure as one example.

In some embodiments, as shown in FIG. 6, the outer packaging may include a housing 51 and a cover plate 53. The housing 51 may include a bottom plate and side plates connected to the bottom plate. The bottom plate and the side plates define, in an enclosing manner, an accommodating cavity. The housing 51 is provided with an opening communicating with the accommodating cavity, and the cover plate 53 is configured for lidding the opening to close the accommodating cavity. The positive electrode plate, the negative electrode plate, and the separator may form the electrode assembly 52 through a winding process and/or a stacking process. The electrode assembly 52 is packaged in the accommodating cavity. The electrolytic solution is infiltrated into the electrode assembly 52. The number of electrode assemblies 52 included in the battery cell 5 may be one or more and may be adjusted as needed.

The method for preparing the battery cell of the present application is well known. In some embodiments, the positive electrode plate, the separator, the negative electrode plate, and the electrolytic solution may be assembled to form a battery cell. As an example, the positive electrode plate, the separator, and the negative electrode plate may form an electrode assembly through a winding process and/or a stacking process. The electrode assembly is placed in an outer packaging, dried, and then injected with an electrolytic solution. After undergoing processes such as packaging in vacuum, standing, formation, and shaping, a battery cell is obtained.

In some embodiments of the present application, the battery cells according to the present application may be assembled into a battery module. The number of battery cells included in the battery module may be more than one, and the specific number may be adjusted based on the application and capacity of the battery module.

FIG. 7 is a schematic view of a battery module 4 as one example. As shown in FIG. 7, in the battery module 4, a plurality of battery cells 5 may be sequentially arranged in the length direction of the battery module 4. Certainly, the arrangement may also be in any other manner. Further, the plurality of battery cells 5 may be fixed by fasteners.

Optionally, the battery module 4 may further include a shell having an accommodating space in which the plurality of battery cells 5 are accommodated.

In some embodiments, the above battery module may further be assembled into a battery pack; the number of battery modules included in the battery pack may be adjusted based on the application and capacity of the battery pack.

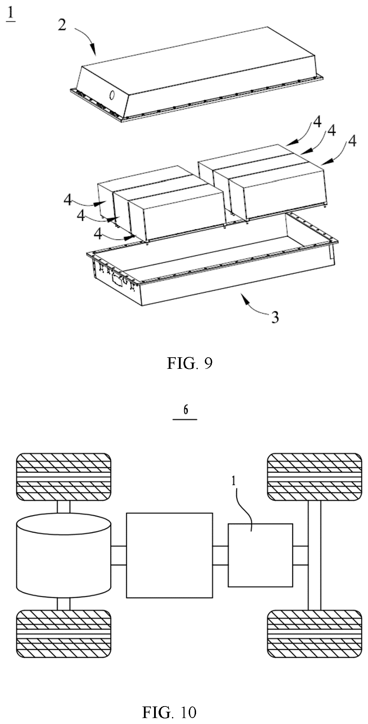

FIGs. 8 and 9 are schematic views of a battery pack 1 as one example. As shown in FIGs. 8 and 9, the battery pack 1 may include a battery case and a plurality of battery modules 4 arranged in the battery case. The battery case includes an upper case body 2 and a lower case body 3. The upper case body 2 is configured to lid the lower case body 3 and the two form a closed space for accommodating the battery modules 4. The plurality of battery modules 4 may be arranged in any manner in the battery case.

The battery according to the embodiments of the present application may include one battery cell or a plurality of battery cells. In the case that the battery includes a plurality of battery cells, the battery may include a battery module or a battery pack.

### Electric Device

In a third aspect of the embodiments of the present application, an electric device is provided. The electric device includes at least one of the battery cell according to the present application, a battery module, or a battery pack. The battery cell, the battery module, or the battery pack can be used as a power source for the electric device, and they can also be used as an energy storage unit for the electric device. The electric device may be, but is not limited to, a mobile device (e.g., a mobile phone or a laptop computer), an electric vehicle (e.g., a pure electric vehicle, a hybrid electric vehicle, a plug-in hybrid electric vehicle, an electric bicycle, an electric scooter, an electric golf cart, or an electric truck), an electric train, ship, or satellite, an energy storage system, or the like.

A battery cell, a battery module, or a battery pack may be selected based on the use requirements of the electric device.

FIG. 10 is a schematic view of an electric device 6 as one example. The electric device 6 is a pure electric vehicle, a hybrid electric vehicle, a plug-in hybrid electric vehicle, or the like. To meet the requirements of the electric device 6 for high power and high energy density of the battery, a battery pack or a battery module may be used.

As another example, the electric device may be a mobile phone, a tablet computer, a laptop computer, or the like. The electric device is generally required to be light and thin, and a battery cell may thus be used as the power source.

### Examples

The following examples more specifically describe the content disclosed in the present application. These examples are intended for illustrative purposes only, since various modifications and changes within the scope of the content disclosed in the present application will be apparent to those skilled in the art. Unless otherwise stated, all parts, percentages, and ratios reported in the following examples are based on mass, and all reagents used in the examples are commercially available or synthesized according to conventional methods and can be used directly without further treatment, and the instruments used in the examples are commercially available.

### Example 1. Preparation of Lithium-ion Battery

### 1. Preparation of positive electrode plate

An aluminum foil with a thickness of 12 µm is used as a positive electrode current collector.

The positive electrode active material LiNi_{0.5}Co_{0.2}Mn_{0.3}O₂, the conductive agent carbon black, and the binder polyvinylidene fluoride (PVDF) were fully stirred and mixed in an appropriate amount of solvent N-methylpyrrolidone (NMP) at a weight ratio of 97.2:1.7:1.1 to form a uniform positive electrode slurry. The positive electrode slurry was uniformly applied on the surface of the positive electrode current collector aluminum foil, dried, and cold-pressed to obtain a positive electrode plate.

### 2. Preparation of negative electrode plate

### 2.1 Preparation of second negative electrode active material layer

A 6 µm copper foil current collector was provided.

A negative electrode bottom coating was arranged on the copper foil current collector, and the negative electrode bottom coating included 5% acrylic resin PAA and 95% acetylene black.

100-nanoscale elemental silicon particles, artificial graphite, acetylene black, and acrylic resin PAA were stirred and uniformly mixed in proportions of 50%, 40%, 5%, and 5% by percentage content to obtain a bottom coating slurry. Then, the bottom coating slurry was uniformly applied on the negative electrode bottom coating by extrusion spraying, and then dried to obtain a substrate coated with a second negative electrode active material layer.

### 2.2 Preparation of negative electrode plate

Artificial graphite, acetylene black, and acrylic resin PAA were stirred and uniformly mixed in proportions of 97%, 2%, and 1% by percentage content to obtain a negative electrode coating slurry for the first region.

Artificial graphite, acetylene black, and acrylic resin PAA were stirred and uniformly mixed in proportions of 97%, 2%, and 1% by percentage content to obtain a negative electrode coating slurry for the second region.

Then, the above two types of slurries were uniformly applied on the surface of the substrate having the second negative electrode active material layer by extrusion spraying through a double-layer U-shaped gasket die head, and then dried, cold-pressed, and cut to obtain a negative electrode plate.

### 3. Separator

A porous polypropylene film was used as a separator.

### 4. Preparation of electrolytic solution

In an environment with a water content of less than 10 ppm, organic solvents ethylene carbonate (EC) and ethyl methyl carbonate (EMC) were mixed uniformly at a volume ratio of 3:7. 12.5% LiPF₆ lithium salt was added and dissolved in the organic solvents, and the mixture was stirred uniformly to obtain an electrolytic solution.

### 5. Preparation of battery cell

The positive electrode plate, the separator, and the negative electrode plate described above were stacked in sequence, with the separator arranged between the positive electrode plate and the negative electrode plate to play an isolating role, and then wound to obtain an electrode assembly. The electrode assembly was placed in an outer packaging housing, dried, and then injected with the electrolytic solution. After undergoing processes such as packaging in vacuum, standing, formation, and shaping, a lithium-ion battery was obtained.

### Comparative Example 1

The lithium-ion battery was prepared by a method similar to that of Example 1. The difference from Example 1 was that the preparation of the negative electrode plate was as follows:

### A 6 µm copper foil current collector was provided.

A negative electrode bottom coating was arranged on the copper foil current collector, and the negative electrode bottom coating included 5% acrylic resin PAA and 95% acetylene black.

Artificial graphite, acetylene black, and acrylic resin PAA were stirred and uniformly mixed in proportions of 97%, 2%, and 1% by percentage content to obtain a negative electrode slurry.

The above negative electrode slurry was uniformly applied on the surface of the negative electrode bottom coating by extrusion spraying, and then dried, cold-pressed, and cut to obtain a negative electrode plate.

### Examples 2-1 to 2-3

The lithium-ion battery was prepared by a method similar to that of Example 1. The difference from Example 1 was that the compaction density of the second region in the negative electrode plate was adjusted.

### Examples 3-1 and 3-2

The lithium-ion battery was prepared by a method similar to that of Example 1. The difference from Example 1 was that the shape of the second region in the negative electrode plate was adjusted, thereby adjusting the coating areal weight.

### Examples 4-1 and 4-2

The lithium-ion battery was prepared by a method similar to that of Example 1. The difference from Example 1 was that the mass percentage of the silicon-based material in the second negative electrode active material layer in the negative electrode plate was adjusted.

### Examples 5-1 and 5-2

The lithium-ion battery was prepared by a method similar to that of Example 1. The difference from Example 1 was that the coating areal weight of the second negative electrode active material layer in the negative electrode plate was adjusted.

Relevant parameters of Examples and Comparative Examples are shown in Tables 1 and 4.

### Test Section

### 1. Capacity retention rate test of lithium-ion battery after cycling:

At 25 °C, the assembled battery was charged to 3.8 V at 1/3C, allowed to stand for 30 min, and then discharged to 2.0 V at 1C. The above steps were repeated for the same battery, and the battery capacity after 300 cycles was recorded. The capacity after 300 cyls/the initial capacity was the capacity retention rate after 300 cyls.

### 2. Fast-charging performance test of lithium-ion battery at room temperature:

At 25 °C, a copper wire was inserted into the cell to prepare a three-electrode cell. First, the positive electrode-copper wire and the negative electrode-copper wire were each subjected to lithium plating at 20 uA for 2 h to serve as reference electrodes for detecting the potential of the negative electrode. Then, the cell was fully charged at 1/3C, allowed to stand for 60 min, and then discharged to 10% SOC at 1/3C. The cell was charged at 3C, 2C, 1C, 0.5C, 0.2C, 0.1C, and 0.05C separately. When the potential of the negative electrode reached 0 V, the cell was disassembled, and the interface of the negative electrode was observed. The maximum fast-charging rate was determined by comprehensively considering the potential and interface of the negative electrode. The cell was fully charged and then discharged to 90% SOC at 1/3C. The cell was charged at 3C, 2C, 1C, 0.5C, 0.2C, 0.1C, and 0.05C separately. When the potential of the negative electrode reached 0 V, the cell was disassembled, and the interface of the negative electrode was observed. The maximum fast-charging rate was determined by comprehensively considering the potential and interface of the negative electrode.

### Test results

The test results are shown in Tables 1 to 4.

**Table 1**

| Item | First region of first negative electrode active material layer | | | | | |
|---|---|---|---|---|---|---|
| | Mass percentage of carbon-based material (%) | Mass percentage of silicon-based material (%) | Mass percentage of conductive agent (%) | Mass percentage of binder (%) | Compaction density A (g/cm³) | Coating areal weight (g/cm²) |
| Comparative Example 1 | 97 | 0 | 2 | 1 | 1.70 | 350.0 |
| Example 1 | 97 | 0 | 2 | 1 | 1.70 | 350.0 |
| Example 2-1 | 97 | 0 | 2 | 1 | 1.70 | 350.0 |
| Example 2-2 | 97 | 0 | 2 | 1 | 1.70 | 350.0 |
| Example 2-3 | 97 | 0 | 2 | 1 | 1.70 | 350.0 |
| Example 3-1 | 97 | 0 | 2 | 1 | 1.70 | 358.3 |
| Example 3-2 | 97 | 0 | 2 | 1 | 1.70 | 345.8 |
| Example 4-1 | 97 | 0 | 2 | 1 | 1.70 | 350.0 |
| Example 4-2 | 97 | 0 | 2 | 1 | 1.70 | 350.0 |
| Example 5-1 | 97 | 0 | 2 | 1 | 1.70 | 350.0 |
| Example 5-2 | 97 | 0 | 2 | 1 | 1.70 | 350.0 |

**Table 2**

| Item | Second region of first negative electrode active material layer | | | | | | | |
|---|---|---|---|---|---|---|---|---|
| | Mass percentage of carbon-based material (%) | Mass percentage of silicon-based material (%) | Mass percentage of conductive agent (%) | Mass percentage of binder (%) | Compaction density B (g/cm³) | Coating areal weight (g/cm²) | L1/L(%) | L2/L (%) |
| Comparative Example 1 | 97 | 0 | 2 | 1 | 1.70 | 50.0 | \ | \ |
| Example 1 | 97 | 0 | 2 | 1 | 1.36 | 50.0 | 70 | 50 |
| Example 2-1 | 97 | 0 | 2 | 1 | 1.445 | 50.0 | 70 | 50 |
| Example 2-2 | 97 | 0 | 2 | 1 | 1.53 | 50.0 | 70 | 50 |
| Example 2-3 | 97 | 0 | 2 | 1 | 1.615 | 50.0 | 70 | 50 |
| Example 3-1 | 97 | 0 | 2 | 1 | 1.36 | 41.7 | 70 | 30 |
| Example 3-2 | 97 | 0 | 2 | 1 | 1.36 | 54.2 | 60 | 70 |
| Example 4-1 | 97 | 0 | 2 | 1 | 1.36 | 50.0 | 70 | 50 |
| Example 4-2 | 97 | 0 | 2 | 1 | 1.36 | 50.0 | 70 | 50 |
| Example 5-1 | 97 | 0 | 2 | 1 | 1.36 | 50.0 | 70 | 50 |
| Example 5-2 | 97 | 0 | 2 | 1 | 1.36 | 50.0 | 70 | 50 |

**Table 3**

| Item | Second negative electrode active material layer | | | | | |
|---|---|---|---|---|---|---|
| | Mass percentage of carbon-based material (%) | Mass percentage of silicon-based material (%) | Mass percentage of conductive agent (%) | Mass percentage of binder (%) | Compaction density (g/cm³) | Coating areal weight (g/cm²) |
| Comparative Example 1 | \ | \ | \ | \ | \ | \ |
| Example 1 | 40 | 50 | 5 | 5 | 1.70 | 50 |
| Example 2-1 | 40 | 50 | 5 | 5 | 1.70 | 50 |
| Example 2-2 | 40 | 50 | 5 | 5 | 1.70 | 50 |
| Example 2-3 | 40 | 50 | 5 | 5 | 1.70 | 50 |
| Example 3-1 | 40 | 50 | 5 | 5 | 1.70 | 50 |
| Example 3-2 | 40 | 50 | 5 | 5 | 1.70 | 50 |
| Example 4-1 | 30 | 60 | 5 | 5 | 1.70 | 50 |
| Example 4-2 | 70 | 20 | 5 | 5 | 1.70 | 50 |
| Example 5-1 | 40 | 50 | 5 | 5 | 1.70 | 70 |
| Example 5-2 | 40 | 50 | 5 | 5 | 1.70 | 30 |

**Table 4**

| Item | B/A | 300 cyls Capacity retention rate (%) | 10% SOC maximum fast-charging rate | 90% SOC maximum fast-charging rate |
|---|---|---|---|---|
| Comparative Example 1 | 1.00 | 78 | 1.10 | 0.22 |
| Example 1 | 0.80 | 89 | 1.80 | 0.36 |
| Example 2-1 | 0.85 | 87 | 1.75 | 0.35 |
| Example 2-2 | 0.90 | 85 | 1.60 | 0.32 |
| Example 2-3 | 0.95 | 84 | 1.50 | 0.30 |
| Example 3-1 | 0.80 | 85 | 1.75 | 0.35 |
| Example 3-2 | 0.80 | 90 | 1.80 | 0.36 |
| Example 4-1 | 0.80 | 79 | 1.90 | 0.38 |
| Example 4-2 | 0.80 | 92 | 1.75 | 0.35 |
| Example 5-1 | 0.80 | 88 | 1.82 | 0.36 |
| Example 5-2 | 0.80 | 91 | 1.75 | 0.35 |

As can be seen from Tables 1 to 4, in Comparative Example 1, the compaction density of the first region and the compaction density of the second region are equal, the compositions of the first region and the second region are the same, and there may be no obvious boundary between the first region and the second region. In Comparative Example 1, the stress at the edge of the negative electrode film layer is small, and the stress at the center position is large, so that the performance of the negative electrode active material at the center position of the negative electrode film layer may be deteriorated, and the cycle performance is poor.

In the embodiments of the present application, the compaction density of the negative electrode film layer is set differently. The compaction density of the negative electrode active material located at the edge is relatively high, and the compaction density of the negative electrode active material located at the center position is relatively low, which can alleviate the internal stress problem of the negative electrode active material located at the center position, and improve the reactivity of the negative electrode active material located at the center position, thereby improving the uniformity of the reactivity of the overall structure of the negative electrode film layer, improving the kinetic performance of the overall structure of the negative electrode film layer, and improving the cycle performance of the battery cell when the negative electrode plate is applied to the battery cell.

Although illustrative embodiments have been shown and described, it will be understood by those skilled in the art that the above embodiments are not to be construed as limiting the present application, and that changes, substitutions, and modifications can be made to the embodiments without departing from the spirit, principle, and scope of the present application.

## Claims

1. A negative electrode plate, comprising a negative electrode current collector and a negative electrode film layer arranged on at least one side of the negative electrode current collector, wherein the negative electrode film layer comprises at least one negative electrode active material layer comprising a negative electrode active material, and one of the at least one negative electrode active material layer comprises:
a first region, wherein the first region, in a thickness direction of the negative electrode plate, covers at least both ends of the negative electrode current collector in a first direction; the thickness direction is perpendicular to the first direction; and
a second region, wherein the second region and the first region are continuously arranged in the first direction, the second region is sandwiched in the first region, and the second region covers a part of the negative electrode current collector in the thickness direction,
wherein a compaction density of the negative electrode active material located in the first region is A g/cm³, and a compaction density of the negative electrode active material located in the second region is B g/cm³, wherein B/A < 1.

2. The negative electrode plate according to claim 1, wherein 0.8 ≤ B/A < 1.

3. The negative electrode plate according to claim 1 or 2, wherein 1.0 ≤ A ≤ 2.0; or 1.0 ≤ B ≤ 2.0.

4. The negative electrode plate according to any one of claims 1 to 3, wherein a dimension of the negative electrode plate in the first direction is smaller than a dimension of the negative electrode plate in a second direction, and any two of the first direction, the second direction, and the thickness direction are perpendicular to each other.

5. The negative electrode plate according to any one of claims 1 to 4, wherein the negative electrode film layer comprises two negative electrode active material layers, and the two negative electrode active material layers comprise:
a first negative electrode active material layer, wherein the first negative electrode active material layer comprises the first region and the second region; and
a second negative electrode active material layer, located on one side of the first negative electrode active material layer facing the negative electrode current collector.

6. The negative electrode plate according to claim 5, wherein a lithium intercalation potential of the second negative electrode active material layer is greater than a lithium intercalation potential of the first negative electrode active material layer.

7. The negative electrode plate according to claim 5 or 6, wherein the second negative electrode active material layer comprises a silicon-based material, and a mass percentage of the silicon-based material is greater than or equal to 1% and less than 100% based on a total mass of the second negative electrode active material layer.

8. The negative electrode plate according to any one of claims 5 to 7, wherein the second negative electrode active material layer comprises at least one of a conductive agent and a binder, and a total mass percentage of the conductive agent and the binder is less than or equal to 50% based on the total mass of the second negative electrode active material layer.

9. The negative electrode plate according to any one of claims 1 to 8, wherein the first region comprises a carbon-based material, and a mass percentage of the carbon-based material is greater than or equal to 90% and less than 100% based on a total mass of the first region; and/or
the first region comprises at least one of a conductive agent and a binder, and a total mass percentage of the conductive agent and the binder is less than or equal to 5% based on the total mass of the first region.

10. The negative electrode plate according to any one of claims 1 to 9, wherein the second region comprises a carbon-based material, and a mass percentage of the carbon-based material is greater than or equal to 90% and less than 100% based on a total mass of the second region; and/or
the second region comprises at least one of a conductive agent and a binder, and a total mass percentage of the conductive agent and the binder is less than or equal to 5% based on the total mass of the second region.

11. The negative electrode plate according to any one of claims 1 to 10, wherein the negative electrode plate further comprises a negative electrode bottom coating, and the negative electrode bottom coating is located between the negative electrode current collector and the negative electrode film layer;
the negative electrode bottom coating comprises a binder, and a mass percentage of the binder is less than or equal to 5% based on a total mass of the negative electrode bottom coating; and/or
the negative electrode bottom coating comprises a conductive agent, and a mass percentage of the conductive agent is greater than or equal to 95% and less than 100% based on the total mass of the negative electrode bottom coating.

12. A battery cell, comprising the negative electrode plate according to any one of claims 1 to 11.

13. An electric device, comprising the battery cell according to claim 12.
